# EUROPÄISCHE PATENTSCHRIFT

(11) **EP 0 758 024 B1**
(45) Veröffentlichungstag und Bekanntmachung des Hinweises auf die Patenterteilung: **20.10.1999**
(21) Anmeldenummer: 96112108.4
(22) Anmeldetag: 26.07.1996
(51) Int. Cl.: C22B 1/244

(54) **Verfahren zur Agglomerierung von ölhaltigem Walzzunderschlamm**
Process for agglomerating oily mill scale sludges
Procédé d'agglomération de boues huileuses de laminoirs

(30) Priorität: 09.08.1995 DE 19529217
(43) Veröffentlichungstag der Anmeldung: 12.02.1997
(73) Patentinhaber: DSU Gesellschaft für Dienstleistungen und Umwelttechnik mbH & Co. KG, 47139 Duisburg-Beeckerwerth (DE)
(72) Erfinder: Kokkelink, Hermann, 46509 Xanten (DE)
(74) Vertreter: Werner, Hans-Karsten, Dr.Dipl.-Chem.

(56) Entgegenhaltungen:
- EP-A- 0 198 302
- EP-A- 0 277 018
- CA-A- 890 342
- DE-A- 4 101 584
- DE-B- 2 606 272
- US-A- 5 328 657
- J. FALBE ET AL.: "RÖMPP CHEMIE LEXIKON" , GEORG THIEME VERLAG , STUTTGART, DE - NEW YORK, US, 9. AUFLAGE, 1991 XP002016362 * Seite 3508, 3519, 4394 *

## Beschreibung

Gegenstand der vorliegenden Erfindung ist ein Verfahren zur Agglomerierung von wasser- und ölhaltigem Schlamm, insbesondere Walzzunderschlamm. Ölhaltiger Walzzunderschlamm fällt in zähflüssiger bis pastöser, schwer handhabbarer Konsistenz an. Der Ölgehalt beträgt bis zu 10 Massen-%, der Wassergehalt liegt je nach Sedimentationszeit im Bereich zwischen 20 und 50 Massen-%. Alle bisherigen Versuche zur weiteren mechanischen Abtrennung der Wasserphase waren bisher wenig erfolgversprechend. Walzzunderschlamm wird daher überwiegend in größeren Becken über längere Zeit abgelagert, um ihn dann auf diese Weise etwas zu kompaktieren und besser verarbeiten zu können. Auch nach langer Lagerzeit liegt der Wassergehalt von Walzzunderschlamm immer noch im Bereich von 15 bis 20 %. Es handelt sich immer noch um ein sehr pastöses, schlecht handhabbares Material.

Um Walzzunderschlamm, der aufgrund seines hohen Metalloxidgehaltes einen Wertstoff darstellt, wieder in den Hochofenprozeß zurückführen zu können, müßte er in eine gesinterte grobstückige Form überführt werden. Bei einer Vortrocknung mit Wärme entstehen Verkrustungen im Trockner. Diese Verkrustungen lassen sich vermindern, indem ein hoher Anteil von bereits getrocknetem Walzzunderschlamm zugemischt wird. Diese Rückführung vom Material bedingt jedoch sehr viel größere und teurere Anlagen. Weiterhin ist dieses Verfahren verbunden mit starker Staubentwicklung und es entsteht ein agglomeriertes Produkt von nur mäßiger Qualität.

Die DE 41 01 584 A1 beschreibt ein Verfahren zur Aufbereitung von ölhaltigem Walzenzunder, wobei der Walzenzunder anschließend im Stahlerzeugungsprozeß wiederverwertet werden soll. Nach Zugabe des Bindemittels wie Melasse, insbesondere Zuckerrübenmelasse, wird der Walzenzunder brikettiert, wobei die Briketts eine bestimmte Mindestdruck- und Abriebfestigkeit aufweisen sollen.

Die US 5,328,657 beschreibt ein Verfahren zur Herstellung von Formpreßteilen aus Metallpartikeln, wobei den Metallpartikeln eine polyorganische Säure wie Polyacrylsäure zugesetzt wird, die mit den Metallteilen reagieren soll. Das Gemisch wird in Formen gegossen und durch Anwendung von Druck gesintert.

Die Verwendung von Polyacrylsäuren zur Agglomerierung von Partikeln, z.B. von Erzkonzentraten, mit einem hohen Wasseranteil ist aus CA-A-890 342 bekannt.

Die Erfindung hat sich somit die Aufgabe gestellt, ein Verfahren zur Agglomerierung von wasser- und ölhaltigem Schlamm, insbesondere Walzzunderschlamm zu entwickeln, welches einfacher, preiswerter und sicherer ist.

Diese Aufgabe konnte jetzt überraschend einfach dadurch gelöst werden, daß dem Schlamm 0,05 bis 0,3 Gew.-% einer stark wasserbindenden Polyacrylsäure zugemischt wird. Bereits beim Zumischen der Polyacrylsäure entstehen Granulate, die staubfrei und gut handhabbar sind.

Vorzugsweise wird die Polyacrylsäure in Form einer Ölsuspension zugemischt.

Noch bessere Ergebnisse werden erzielt, wenn dem Gemisch zusätzlich zerkleinerte Kunststoffabfälle zugemischt werden. Als Kunststoffabfälle kommen in Frage thermoplastische Materialien, Materialien, die bei Temperaturen oberhalb von 150°C verkoken sowie Verbundmaterialien, die eine thermoplastische und eine verkokende Komponente enthalten. Hervorragende Ergebnisse wurden beispielsweise erzielt mit ca. 6 mm großen Resten von Polyethylen-beschichteten Rohfotopapiergranulat, ein Verbundmaterial, das ansonsten nur sehr schwer zu verwerten ist.

Das erfindungsgemäße Verfahren kann sowohl diskontinuierlich als kontinuierlich durchgeführt werden. Für die Qualität der Granulate ist entscheidend eine gleichmäßige feine Eindosierung der Polyacrylsäure in Form eines feinen Pulvers oder in Form einer Ölsuspension.

Vergleichende Versuche mit anderen wasserbindenden Komponenten wie Kalk oder Tone führen nicht zum gewünschten Erfolg. Sie stören sogar die Wasserbindung der Polyacrylsäure. Die zusätzlich zumischbaren zerkleinerten Kunststoffabfälle sollten nach Möglichkeit wasserabweisend sein. Jedenfalls sollten sie nicht stark wasserbindend sein. Die Wasserbindung erfolgt vielmehr erfindungsgemäß durch die Polyacrylsäure.

Außer Walzzunderschlamm sind für das erfindungsgemäße Verfahren auch andere wasser- und ölhaltige Schlämme geeignet, beispielsweise emulsionshaltige Schleif- und Filterschlämme, deren Entsorgung und/oder Verwertung ebenfalls große Schwierigkeiten bereiten.

## Patentansprüche

1. Verfahren zur Agglomerierung von wasser- und oelhaltigem Schlamm, dadurch gekennzeichnet, daß dem Schlamm 0,05 bis 0,3 Gew.-% einer stark wasserbindenden Polyacrylsäure zugemischt wird.

2. Verfahren gemäß Anspruch 1, dadurch gekennzeichnet, daß die Polyacrylsäure in Form einer Ölsuspension zugemischt wird.

3. Verfahren gemäß einem der Ansprüche 1 oder 2, dadurch gekennzeichnet, daß zusätzlich zerkleinerte Kunststoffabfälle zugemischt werden.

4. Verfahren gemäß einem der Ansprüche 1 bis 3, dadurch gekennzeichnet, daß als Schlamm Walzzunderschlamm und/ oder emulsionshaltige Schleif- und Filterschlämme eingesetzt werden.

## Claims

1. A process for the agglomeration of a water- and oilcontaining sludge, characterized in that from 0.05 to 0.3% by weight of a strongly water-binding poly(acrylic acid) is admixed with said sludge.

2. The process according to claim 1, characterized in that said poly(acrylic acid) is admixed in the form of an oil suspension.

3. The process according to any of claims 1 or 2, characterized in that ground plastic scrap is additionally admixed.

4. The process according to any of claims 1 to 3, characterized in that mill scale sludge and/or emulsion-containing swarfs and filtration sludges are employed as said sludge.

## Revendications

1. Procédé pour l'agglomération de boue contenant de l'eau et de l'huile, caractérisé en ce qu'on mélange avec la boue 0,05 à 0,3% en poids d'un acide polyacrylique qui se lie fortement à l'eau.

2. Procédé selon la revendication 1, caractérisé en ce que l'acide polyacrylique est mélangé sous la forme d'une suspension dans de l'huile.

3. Procédé selon la revendication 1 ou 2, caractérisé en ce qu'on mélange, en outre, des déchets de matière plastique broyés.

4. Procédé selon l'une des revendications 1 à 3, caractérisé en ce qu'on utilise, comme boue, de la boue de battitures et/ou du cambouis de meulage et des boues de filtration contenant une émulsion.
